# EUROPEAN PATENT APPLICATION

(11) **EP 4 507 021 A1**
(43) Date of publication of application: **12.02.2025**
(21) Application number: 24185995.8
(22) Date of filing: 02.07.2024
(51) Int. Cl.: H01M 4/131, H01M 4/134, H01M 4/36, H01M 4/38, H01M 4/485, H01M 4/505, H01M 4/525, H01M 10/0525

(54) **RECHARGEABLE LITHIUM BATTERY**

(30) Priority: 07.08.2023 KR 20230103084
(71) Applicant: Samsung SDI Co., Ltd., Yongin-si, Gyeonggi-do 17084 (KR)
(72) Inventor: CHO, Youngkwang, 17084 Yongin-si, Gyeonggi-do (KR); KIM, Hyunwoo, 17084 Yongin-si, Gyeonggi-do (KR); HAN, Seung-Hun, 17084 Yongin-si, Gyeonggi-do (KR); KIM, Beom Kwon, 17084 Yongin-si, Gyeonggi-do (KR); LEE, Yoonhoi, 17084 Yongin-si, Gyeonggi-do (KR); KIM, Soochan, 17084 Yongin-si, Gyeonggi-do (KR)
(74) Representative: Michalski Hüttermann & Partner Patentanwälte mbB

(57) **Abstract**

A rechargeable lithium battery includes a positive electrode including a positive electrode active material layer; and a negative electrode including a negative electrode active material layer, wherein the positive electrode active material layer includes a positive electrode active material and Li₅FeO₄; and the negative electrode active material layer includes a negative electrode active material including about 10 wt% to about 15 wt% of silicon particles.

## Description

### BACKGROUND

### 1. Field

One or more embodiments relate to a rechargeable lithium battery.

### 2. Description of the Related Art

Recently, with the rapid spread of electronic devices that utilize batteries, such as mobile phones, laptop computers, and/or electric vehicles, the demand for rechargeable batteries with relatively high energy density and relatively high capacity is rapidly increasing. Accordingly, research and development to improve the performance of rechargeable lithium batteries is actively underway or pursued.

A rechargeable lithium battery includes a positive electrode and a negative electrode including an active material capable of intercalating and deintercalating lithium ions, and an electrolyte solution, and electrical energy is produced through oxidation and reduction reactions when lithium ions are intercalated/deintercalated from/to the positive electrode and negative electrode.

Transition metal compounds such as lithium cobalt oxide, lithium nickel oxide, and/or lithium manganese oxide are utilized as positive electrode active materials for rechargeable lithium batteries.

Crystalline carbon such as graphite has been mainly utilized as a negative electrode active material for rechargeable lithium batteries, but recently, as relatively high energy density and relatively high capacity batteries are desired or required, negative electrode active materials including silicon particles are being utilized or pursued.

When utilizing a negative electrode active material including silicon particles, the electrolyte decomposes during initial charging, forming (or providing) an unstable solid electrolyte interphase (SEI layer) on the surface of the negative electrode active material and generating irreversible capacity. As the content (e.g., amount) of silicon particles in the negative electrode active material increases, the above phenomenon worsens, energy density loss increases, and a problem occurs in which an amount (e.g., a theoretical amount) of the rechargeable lithium battery cannot be sufficiently utilized.

The above information disclosed in this Background section is only for enhancement of understanding of the background of the disclosure and therefore it may contain information that does not constitute prior art.

### SUMMARY

Aspects of one or more embodiments of the present disclosure relate to a rechargeable lithium battery that solves or reduces the irreversibility problem while utilizing a negative electrode active material including silicon particles.

Additional aspects will be set forth in part in the description which follows and, in part, will be apparent from the description, or may be learned by practice of the presented embodiments of the disclosure.

One or more embodiments of the present disclosure provide a rechargeable lithium battery including a positive electrode including a positive electrode active material layer; and a negative electrode including a negative electrode active material layer, wherein the positive electrode active material layer includes a positive electrode active material and Li₅FeO₄; and the negative electrode active material layer includes a negative electrode active material including about 10 wt% to about 15 wt% of silicon particles.

The rechargeable lithium battery according to one or more embodiments can solve or reduce the irreversibility problem by utilizing a negative electrode active material including about 10 wt% to about 15 wt% of silicon particles and utilizing Li₅FeO₄ as a positive electrode irreversible additive.

### BRIEF DESCRIPTION OF THE DRAWINGS

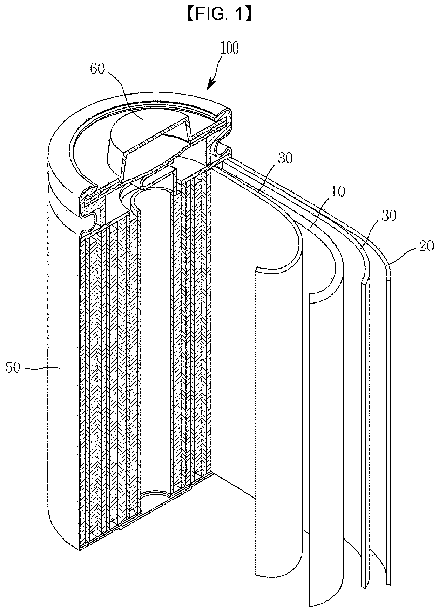

The accompanying drawing is included to provide a further understanding of the present disclosure, and is incorporated in and constitutes a part of this specification. The drawing illustrates example embodiments of the present disclosure and, together with the description, serves to explain principles of present disclosure. In the drawings:
The drawing is a schematic perspective view showing a rechargeable lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element, such as a layer, film, region or substrate, is referred to as being "on" another element, it can be directly on the other element, or one or more intervening elements may be present. In addition, it will also be understood that when an element is referred to as being "between" two elements, it can be the only element between the two elements, or one or more intervening elements may also be present.

As used herein, the singular forms "a," "an" and "the" are intended to include the plural forms as well, unless the context clearly indicates otherwise. In addition, unless otherwise specified, "A or B" may mean "including A, including B, or including A and B." Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "one of a, b, or c," "one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items.

As used herein, "combination thereof" may mean a mixture of constituents, a stack, a composite, a copolymer, an alloy, a blend, and/or a reaction product.

In the present disclosure, when particles are spherical, "diameter" indicates a particle diameter or an average particle diameter, and when the particles are non-spherical, the "diameter" indicates a major axis length or an average major axis length. When a definition is not otherwise provided, a particle diameter may be an average particle diameter. This average particle diameter refers to an average particle diameter (D50), which refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.. The average particle diameter (D50) can be measured by methods generally available and/or suitable to those skilled in the art, for example, by measuring with a particle size analyzer, a transmission electron microscope or scanning electron microscope, or a scanning electron microscope. In one or more embodiments, a dynamic light-scattering measurement device is utilized to perform a data analysis, and the number of particles is counted for each particle size range. From this, the average particle diameter (D50) value may be easily obtained through a calculation. A laser diffraction method may also be utilized. When measuring by laser diffraction, more specifically, the particles to be measured are dispersed in a dispersion medium and then introduced into a commercially available laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device can be calculated.

### Rechargeable Lithium Battery

One or more embodiments provide a rechargeable lithium battery including a positive electrode including a positive electrode active material layer; and a negative electrode including a negative electrode active material layer, wherein the positive electrode active material layer includes a positive electrode active material and Li₅FeO₄; and the negative electrode active material layer includes a negative electrode active material including about 10 wt% to about 15 wt% of silicon particles.

The rechargeable lithium battery according to one or more embodiments can solve or reduce the irreversibility problem by utilizing a negative electrode active material including about 10 wt% to about 15 wt% of silicon particles and utilizing Li₅FeO₄ as a positive electrode irreversible additive.

In one or more embodiments, Li₅FeO₄ may function as an "positive electrode irreversible additive."

Herein, "positive electrode irreversible additive" is also referred to as "sacrificial positive electrode."

During the charging process of a lithium battery, lithium ions that have lost electrons from the positive electrode active material move from the positive electrode to the negative electrode through the electrolyte and are stored between the layer structures of the negative electrode active material. During the discharging process, the lithium ions move from the negative electrode to the positive electrode through the electrolyte and at this time, some of the lithium ions released from the positive electrode remain between the layer structures of the negative electrode active material, so that 100% of the lithium ions do not return to the positive electrode. As the amount of lithium ions remaining in the negative electrode can lead to a decrease in capacity, the positive electrode active material added additionally to compensate for this is called an "positive electrode irreversible additive."

In general, the positive electrode active material utilized in the positive electrode can be further mixed with the same or different active materials as a "positive electrode irreversible additive."

The Li₅FeO₄ can solve or reduce the irreversibility problem in the initial 2^{nd} charging section (e.g., 2^{nd} charge cycle, where a charge cycle includes one charging and then one discharging process of a rechargeable lithium battery, such that the 2^{nd} charge cycle has undergone two charging and two discharging cycles) of a rechargeable lithium battery and improve cycle-life characteristics in the long term.

For example, the Li₅FeO₄ may be converted to pseudocubic (Li₃FeO_{3.5}) in the 1^{st} charging section (e.g., 1^{st} charge cycle) and converted to another pseudocubic (LiFeO₂) in the 2^{nd} charging section (e.g., 2^{nd} charge cycle).
1^{st} charging section:

   Li₅FeO₄→2Li⁺+2e⁻+Li₃FeO_{3.5}+0.25O₂
"2^{nd} charging section:

   Li₃FeO_{3.5}→2Li⁺+2e⁻+LiFeO₂+0.75O₂

In this process, during the initial charging (formation) of the negative electrode active material including silicon particles, lithium ions (Li⁺) generated from Li₃FeO₄ instead of the positive electrode active material participate in an irreversible reaction, thereby minimizing or reducing discharge capacity loss.

The D50 particle size or diameter of Li₃FeO₄ (in a form of particles) may be smaller than the D50 particle size or diameter of the positive electrode active material (in a form of particles). For example, the D50 particle size of Li₅FeO₄ may be about 1 micrometers (µm) to about 20 µm, about 3 µm to about 15 µm, or about 5 µm to about 9 µm.

The BET specific surface area of Li₅FeO₄ may be greater than about 0 m²/g; and less than or equal to about 3 m²/g, less than or equal to about 2.5 m²/g, or less than or equal to about 2.2 m²/g. Herein, the "specific surface area" is measured by the BET method, and can be specifically calculated from the amount of nitrogen gas adsorption under liquid nitrogen temperature (77K) utilizing BELSORP-mino II from BEL Japan.

Based on a total amount of 100 wt% of the positive electrode active material layer, a content (e.g., amount) of Li₅FeO₄ may be about 1 wt% to about 10 wt%, about 1 wt% to about 5 wt%, or about 1 wt% to about 3 wt%.

In this range, during the initial charging (formation) of the negative electrode active material including silicon particles, lithium ions (Li⁺) generated from Li₃FeO₄ instead of the positive electrode active material participate in an irreversible reaction, thereby minimizing or reducing discharge capacity loss.

### Positive Electrode Active Material

The positive electrode active material may be a compound (lithiated intercalation compound) capable of intercalating and deintercalating lithium. For example, one or more types (kinds) of composite oxides of lithium and a metal of (e.g., selected from among) cobalt, manganese, nickel, and/or any suitable combination thereof may be utilized.

The composite oxide may be a lithium transition metal composite oxide, and specific examples may include lithium nickel-based oxide, lithium cobalt-based oxide, lithium manganese-based oxide, a lithium iron phosphate-based compound, cobalt-free lithium nickel-manganese-based oxide, and/or any suitable combination thereof.

As an example, a compound represented by any one or more of the following chemical formulas may be utilized: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and/or LiₐFePO₄ (0.90≤a≤1.8).

In the above chemical formulas, A is Ni, Co, Mn, and/or any suitable combination thereof; X is Al, Ni, Co, Mn, Cr, Fe, Mg, Sr, V, a rare earth element, and/or any suitable combination thereof; D is O, F, S, P, and/or any suitable combination thereof; G is Al, Cr, Mn, Fe, Mg, La, Ce, Sr, V, and/or any suitable combination thereof; and L¹ is Mn, Al, and/or any suitable combination thereof.

As an example, the positive electrode active material may be a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. The high nickel-based positive electrode active materials can achieve high capacity and can be applied to a high-capacity, high-density rechargeable lithium battery.

For example, the positive electrode active material may include a lithium nickel-based composite oxide represented by Chemical Formula 1.

Chemical Formula 1 Liₐ₁Niₓ₁M¹y₁M²_{z1}O_{2-b1}X_{b1}

In Chemical Formula 1, 0.9≤a1≤1.2, 0.7≤x1≤1, 0≤y1≤0.2, 0≤z1≤0.2, 0.9≤x1+y1+z1≤1.1, and 0≤b1≤0.1; M¹ and M² may each independently be one or more elements of (e.g., selected from among) Al, B, Ba, Ca, Ce, Co, Cr, Cu, Fe, Mg, Mn, Mo, Nb, Si, Sr, Ti, V, W, and/or Zr; and X may be one or more elements of (e.g., selected from among) F, P, and/or S.

In Chemical Formula 1, for example, 0.75≤x1≤1, 0≤y1≤0.18, and 0≤z1≤0.18; 0.85≤x1≤1, 0≤y1≤0.15, and 0≤z1≤0.15; or 0.9≤x1≤1, 0≤y1≤0.1, and 0≤z1≤0.1.

For example, the positive electrode active material may include a lithium nickel-based composite oxide represented by Chemical Formula 2. The compound represented by Chemical Formula 2 may be referred to as a lithium nickel cobalt-based composite oxide.

Chemical Formula 2 Liₐ₂Niₓ₂Co_{y2}M³_{z2}O_{2-b2}X_{b2}

In Chemical Formula 2, 0.9≤a2≤1.8, 0.7≤x2<1, 0<y2≤0.2, 0≤z2≤0.2, 0.9≤x2+y2+z2≤1.1, 0≤b2≤0.1; M³ is one or more elements of (e.g., selected from among) Al, B, Ba, Ca, Ce, Cr, Fe, Mg, Mn, Mo, Nb, Si, Sr, Ti, V, W, and/or Zr; and X may be one or more elements of (e.g., selected from among) F, P, and/or S.

In Chemical Formula 2, for example, 0.75≤x2≤0.99, 0≤y2≤0.15, and 0≤z2≤0.15; 0.85≤x2≤0.99, 0.01≤y2≤0.15, and 0.01≤z2≤0.15; or 0.9≤x2≤0.99, 0.01≤y2≤0.1, and 0.01≤z2≤0.1.

As an example, the positive electrode active material may include a lithium nickel-based composite oxide represented by Chemical Formula 3. The compound of Chemical Formula 3 may be referred to as a lithium nickel-cobalt-aluminum oxide or a lithium nickel-cobalt-manganese oxide.

Chemical Formula 3 Liₐ₃Niₓ₃CO_{y3}M⁴_{z3}M⁵_{w3}O_{2-b3}X_{b3}

In Chemical Formula 3, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, 0≤b3≤0.1, M⁴ is one or more elements of (e.g., selected from among) Al and/or Mn, M⁵ is one or more elements of (e.g., selected from among) B, Ba, Ca, Ce, Cr, Fe, Mg, Mo, Nb, Si, Sr, Ti, V, W, and/or Zr, and/or X may be one or more elements of (e.g., selected from among) F, P, and/or S.

In Chemical Formula 3, for example, 0.75≤x3≤0.98, 0≤y3≤0.16, and 0≤z3≤0.16; 0.85≤x3≤0.98, 0.01≤y3≤0.14, 0.01≤z3≤0.14, and 0≤w3≤0.14; or 0.9≤x3≤0.98, 0.01≤y3≤0.09, 0.01≤z3≤0.09, and 0≤w3≤0.09.

As an example, the positive electrode active material may include a lithium nickel-based composite oxide represented by Chemical Formula 4. The compound of Chemical Formula 4 may be referred to as a cobalt-free lithium nickel-manganese oxide.

Chemical Formula 4 Liₐ₄Niₓ₄Mn_{y4}M⁶_{z4}O_{2-b4}X_{b4}

In Chemical Formula 4, 0.9≤a2≤1.8, 0.7≤x4<1, 0<y4≤0.2, 0≤z4≤0.2, 0.9≤x4+y4+z4≤1.1, 0≤b4≤0.1, M⁶ is one or more elements of (e.g., selected from among) Al, B, Ba, Ca, Ce, Cr, Fe, Mg, Mo, Nb, Si, Sr, Ti, V, W, and Zr, and/or X may be one or more elements of (e.g., selected from among) F, P, and/or S.

### Positive Electrode

The positive electrode for a rechargeable lithium battery may include a current collector and a positive electrode active material layer on the current collector. The positive electrode active material layer may include a positive electrode active material and may further include a binder and/or a conductive material.

A content (*e.g*., amount) of the positive electrode active material may be about 90 wt% to about 99.5 wt%, and a content (*e.g*., amount) of the binder and the conductive material may be about 0.5 wt% to about 5 wt%, based on 100 wt% of the positive electrode active material layer.

The binder serves to attach (effectively attach) the positive electrode active material particles to each other and also to attach (effectively attach) the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but the present disclosure is not limited thereto.

The conductive material may be utilized to impart conductivity (*e.g*., electrical conductivity) to the electrode. Any material that does not cause chemical change (*e.g*., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and carbon nanotube; a metal-based material including copper, nickel, aluminum, silver, and/or the like, in a form of a metal powder or a metal fiber; a conductive polymer such as a polyphenylene derivative; and/or any suitable combination thereof.

The current collector may include Al, but the present disclosure is not limited thereto.

### Negative Electrode Active Material

The negative electrode active material layer includes a negative electrode active material including about 10 wt% to about 15 wt% of silicon particles.

The negative electrode active material may be a silicon-carbon composite. In one or more embodiments, the silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

### Negative Electrode

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may serve to attach (effectively attach) the negative electrode active material particles to each other and also to attach (effectively attach) the negative electrode active material to the current collector. The binder may include a non-aqueous binder, an aqueous binder, a dry binder, and/or any suitable combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or any suitable combination thereof.

The aqueous binder may be of (e.g., selected from among) a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or any suitable combination thereof.

When an aqueous binder is utilized as the negative electrode binder, it may further include a cellulose-based compound capable of imparting viscosity. The cellulose-based compound includes one or more of carboxyl methyl cellulose, hydroxypropyl methyl cellulose, methyl cellulose, and/or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or any suitable combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of a metal powder or a metal fiber; a conductive polymer such as a polyphenylene derivative; and/or any suitable combination thereof.

The negative electrode current collector may include one of (*e.g*., selected from among) a copper foil, a nickel foil, a stainless steel foil, a titanium foil, a nickel foam, a copper foam, a polymer substrate coated with a conductive metal, and/or any suitable combination thereof, but the present disclosure is not limited thereto.

### Electrolyte Solution

The rechargeable lithium battery may further include an electrolyte solution.

The electrolyte solution includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based solvent, aprotic solvent, and/or any suitable combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methyl propionate, ethyl propionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and/or the like.

The non-aqueous organic solvent may be utilized alone or in combination of two or more.

Additionally, when utilizing a carbonate-based solvent, cyclic carbonate and chain carbonate can be mixed and utilized, and cyclic carbonate and chain carbonate can be mixed at a volume ratio of about 1:1 to about 1:9.

The lithium salt dissolved in the organic solvent supplies lithium ions in a battery, enabling a basic operation of a rechargeable lithium battery, and improving transportation of the lithium ions between the positive and negative electrodes. Examples of a lithium salt may include one or more of **(e.g.,** one or more selected from among) LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), wherein x and y are integers from 1 to 20, lithium trifluoromethane sulfonate, lithium tetrafluoroethane sulfonate, lithium difluorobis(oxalato)phosphate, (LiDFOB), and/or lithium bis(oxalato)borate (LiBOB).

### Separator

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, and/or any suitable combination thereof on one or both surfaces (*e.g*., opposite surfaces) of the porous substrate.

The porous substrate may be a polymer film formed of any one of (*e.g*., any one selected from among) a polymer, or a copolymer and/or a suitable combination of two or more of a polyolefin, such as polyethylene or polypropylene, a polyester such as polyethylene terephthalate, or polybutylene terephthalate, polyacetal, polyamide, polyimide, polycarbonate, polyether ketone, polyaryl ether ketone, polyether imide, polyamideimide, polybenzimidazole, polyether sulfone, polyphenylene oxide, a cyclic olefin copolymer, polyphenylene sulfide, polyethylene naphthalate, a glass fiber, tetrafluoroethylene (*e.g*., TEFLON), and/or polytetrafluoroethylene.

The organic material may include a polyvinylidene fluoride-based polymer or a (meth)acrylic-based polymer.

The inorganic material may include inorganic particles of (e.g., selected from among) Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or any suitable combination thereof, but the present disclosure is not limited thereto.

The organic material and the inorganic material may be mixed in one coating layer, or a coating layer including an organic material and a coating layer including an inorganic material may be stacked.

### Rechargeable Lithium Battery

The rechargeable lithium battery may be classified into cylindrical, prismatic, pouch, or coin-type or kind batteries, and/or the like depending on their shape. The drawing is a schematic view showing a rechargeable lithium battery according to one or more embodiments of the present disclosure. Referring to the drawing, the rechargeable lithium battery 100 may include an electrode assembly including a separator 30 between a positive electrode 10 and a negative electrode 20, and a case 50 in which the electrode assembly is housed. The positive electrode 10, the negative electrode 20, and the separator 30 may be impregnated with an electrolyte solution. The rechargeable lithium battery 100 may include a sealing member 60 that seals the case 50, as shown in the drawing.

Hereinafter, Examples of the present disclosure and Comparative Examples are described. These examples, however, are not in any sense to be interpreted as limiting the scope of the present disclosure.

### Example 1

LiNi_{0.91}Co_{0.04}Al_{0.05}O₂ (D50: 12 µm) as a positive electrode active material, Li₃FeO₄ (D50: 7 µm) as a positive electrode irreversible additive, polyvinylidene fluoride as a binder, and ketjen black as a conductive material were mixed in a weight ratio of 97.5:1:0.75:0.75 and then dispersed in N-methyl pyrrolidone to prepare positive electrode active material slurry.

The positive electrode active material slurry was coated on a 14 µm-thick Al foil and then dried at 110 °C and pressed to obtain a positive electrode having a positive electrode active material layer on the Al foil.

As a negative electrode active material, a silicon-carbon composite including silicon particles and amorphous carbon coated on the surface of the silicon particles was utilized, wherein 10 wt% of the silicon particles was included. The negative electrode active material, a styrene-butadiene rubber binder, and carboxyl methyl cellulose were mixed in a weight ratio of 97:1:2 and then dispersed in distilled water to prepare negative electrode active material slurry.

The negative electrode active material slurry was coated on a 10 µm-thick Cu foil and then dried at 100 °C and pressed to obtain a negative electrode having a negative electrode active material layer formed on the Cu foil.

The manufactured positive and negative electrodes were assembled with a 25 µm-thick polyethylene separation membrane to manufacture an electrode assembly, and after housing the electrode assembly in a 21 mm-wide and 70 mm-long cylindrical can as a battery case, an electrolyte solution was injected thereinto to manufacture a rechargeable lithium battery cell.

The electrolyte solution was prepared by mixing ethylene carbonate (EC): ethyl methyl carbonate (EMC): dimethyl carbonate (DMC) in a volume ratio of 20:10:70 and then dissolving 1.5 M lithium salt (LiPF₆) in the mixed carbonate-based solvent.

### Example 2

A rechargeable lithium battery cell was manufactured in substantially the same manner as in Example 1 except that a silicon-carbon composite including 15 wt% of the silicon particles was utilized.

### Example 3

A rechargeable lithium battery cell was manufactured in substantially the same manner as in Example 1 except that LiNi_{0.91}Co_{0.04}Al_{0.05}O₂ (D50: 12 µm) as a positive electrode active material, Li₅FeO₄ (D50: 7 µm) as a positive electrode irreversible additive, polyvinylidene fluoride as a binder, and ketjen black as a conductive material were mixed in a weight ratio of 96.5:2:0.75:0.75.

### Example 4

A rechargeable lithium battery cell was manufactured in substantially the same manner as in Example 3 except that a silicon-carbon composite including 15 wt% of the silicon particles was utilized.

### Example 5

A rechargeable lithium battery cell was manufactured in substantially the same manner as in Example 1 except that LiNi_{0.91}Co_{0.04}Al_{0.05}O₂ (D50: 12 µm) as a positive electrode active material, Li₅FeO₄ (D50: 7 µm) as a positive electrode irreversible additive, polyvinylidene fluoride as a binder, and ketjen black as a conductive material were mixed in a weight ratio of 95.5:3:0.75:0.75.

### Example 6

A rechargeable lithium battery cell was manufactured in substantially the same manner as in Example 5 except that a silicon-carbon composite including 15 wt% of the silicon particles was utilized.

### Comparative Example 1

A rechargeable lithium battery cell was manufactured in substantially the same manner as in Example 1 except that LiNi_{0.91}Co_{0.04}Al_{0.05}O₂ (D50: 12 µm) as a positive electrode active material, polyvinylidene fluoride as a binder, and ketjen black as a conductive material were mixed in a weight ratio of 98.5:0.75:0.75 without utilizing the positive electrode irreversible additive.

### Comparative Example 2

A rechargeable lithium battery cell was manufactured in substantially the same manner as in Example 1 except that a silicon-carbon composite including 5 wt% of the silicon particles was utilized.

### Comparative Example 3

A rechargeable lithium battery cell was manufactured in substantially the same manner as in Example 1 except that a silicon-carbon composite including 20 wt% of the silicon particles was utilized.

**Table 1**

| | Li₅FeO₄ content (*e.g*., amount) in the positive electrode active material layer (solid content (*e.g*., amount)) (wt%) | Silicon particle content (*e.g*., amount) in negative electrode active material (wt%) |
|---|---|---|
| Comp. Ex. 1 (Ref.) | - | 10 |
| Comp. Ex. 2 | 1 | 5 |
| Comp. Ex. 3 | 1 | 20 |
| Ex. 1 | 1 | 10 |
| Ex. 2 | 1 | 15 |
| Ex. 3 | 2 | 10 |
| Ex. 4 | 2 | 15 |
| Ex. 5 | 3 | 10 |
| Ex. 6 | 3 | 15 |

### Evaluation Example 1: Initial Efficiency

Each of the rechargeable lithium battery cells of the Examples and the Comparative Examples, after proceeding with formation through one charge and discharge at 0.1 C, was checked with respect to efficiency (initial efficiency) at one (e.g., the 1^{st}) and two (e.g., the 2^{nd}) charge cycles (where one charge cycle includes one charge and one discharge process), and the results are shown in Table 2.

The charge and discharge process was set to start charging at 0.2 C in a CC (constant current) mode and after changing the CC (constant current) mode to a CV (constant voltage) mode, to cut off at 4.25 V at 25 °C and then to discharge at 0.2 C in the CC (constant current) mode and cut off at 2.5 V.

The initial efficiency of the rechargeable lithium battery cell is expressed in Equation 1 (where n^{th} cycle in this case is the 1^{st} or 2^{nd} cycle). Initial efficiency (%) = (discharge capacity at nth cycle)/(charge capacity at nth cycle) * 100

### Evaluation Example 2: Capacity Retention Rate

Each of the rechargeable lithium battery cells of the Examples and the Comparative Examples, after proceeding with formation through one charge and discharge at 0.1 C, was checked with respect to capacity retention rate during the n^{th} charge and discharge process, and the results are shown in Table 2.

The charge and discharge process was set to start charging at 0.2 C in a CC (constant current) mode and after changing the CC (constant current) mode to a CV (constant voltage) mode and to cut off at 4.25 V at 25 °C and then to discharge at 0.2 C in the CC (constant current) mode and cut off at 2.5 V.

The capacity retention rate of a rechargeable lithium battery cell is expressed by Equation 2. Capacity retention rate (%) = (discharge capacity at nth cycle)/(discharge capacity at nth cycle) * 100

**Table 2**

| | Initial efficiency (@1 cyc.) | Initial efficiency (@2 cyc.) | Capacity retention rate (@200 cyc.) |
|---|---|---|---|
| Comp. Ex. 1 (Ref.) | 86.0% | 96.34% | 87.45% |
| Comp. Ex. 2 | 86.4% | 96.82% | 88.65% |
| Comp. Ex. 3 | 83.9% | 94.94% | 70.73% |
| Ex. 1 | 85.4% | 96.55% | 90.57% |
| Ex. 2 | 84.6% | 96.45% | 89.12% |
| Ex. 3 | 83.4% | 96.85% | 91.17% |
| Ex. 4 | 82.6% | 96.74% | 90.44% |
| Ex. 5 | 81.4% | 96.87% | 91.88% |
| Ex. 6 | 80.6% | 96.81% | 91.57% |

### Summary

Referring to Table 2, when a negative electrode active material including about 10 wt% to about 15 wt% of silicon particles was utilized with Li₅FeO₄ as a positive electrode irreversible additive, an irreversibility problem was solved or reduced in the initial 2^{nd} charge section (e.g., 2^{nd} charge cycle) of the rechargeable lithium battery cells, and cycle-life characteristics in the long term were improved.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

### Reference Symbols

- 100:: rechargeable lithium battery
- 10:: positive electrode
- 20:: negative electrode
- 30:: separator
- 40:: electrode assembly
- 50:: case
- 60:: sealing member

## Claims

1. A rechargeable lithium battery (100) comprising:
a positive electrode (10) comprising a positive electrode active material layer; and
a negative electrode (20) comprising a negative electrode active material layer,
wherein the positive electrode active material layer comprises a positive electrode active material and Li₅FeO₄; and
the negative electrode active material layer comprises a negative electrode active material comprising about 10 wt% to about 15 wt% of silicon particles.

2. The rechargeable lithium battery (100) as claimed in claim 1, wherein based on a total amount of 100 wt% of the positive electrode active material layer, an amount of Li₅FeO₄ is about 1 wt% to about 10 wt%.

3. The rechargeable lithium battery (100) as claimed in claim 1 or 2, wherein the positive electrode active material comprises a lithium nickel-based composite oxide represented by Chemical Formula 1:
Chemical Formula 1 Liₐ₁Niₓ₁M¹_{y1}M²_{z1}O_{2-b1}X_{b1}
wherein, in Chemical Formula 1,
0.9≤a1≤1.2, 0.7≤x1≤1, 0≤y1≤0.2, 0≤z1≤0.2, 0.9≤x1+y1+z1≤1.1, and 0≤b1≤0.1;
M¹ and M² are each independently one or more elements selected from among Al, B, Ba, Ca, Ce, Co, Cr, Cu, Fe, Mg, Mn, Mo, Nb, Si, Sr, Ti, V, W, and Zr; and
X is one or more elements selected from among F, P, and S.

4. The rechargeable lithium battery (100) as claimed in any of the claims 1 to 3, wherein the positive electrode active material comprises a lithium nickel-based composite oxide represented by Chemical Formula 2:
Chemical Formula 2 Liₐ₂Niₓ₂Co_{y2}M³_{z2}O_{2-b2}X_{b2}
wherein, in Chemical Formula 2,
0.9≤a2≤1.8, 0.7≤x2<1, 0<y2≤0.2, 0≤z2≤0.2, 0.9≤x2+y2+z2≤1.1, and 0≤b2≤0.1;
M³ is one or more elements selected from among Al, B, Ba, Ca, Ce, Cr, Fe, Mg, Mn, Mo, Nb, Si, Sr, Ti, V, W, and Zr; and
X is one or more elements selected from among F, P, and S.

5. The rechargeable lithium battery (100) as claimed in any of the claims 1 to 4, wherein the positive electrode active material comprises a lithium nickel-based composite oxide or a lithium nickel-cobalt-manganese oxide represented by Chemical Formula 3:
Chemical Formula 3 Liₐ₃Niₓ₃CO_{y3}M⁴_{z3}M⁵_{w3}O_{2-b3}X_{b3}
wherein, in Chemical Formula 3, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, and 0≤b3≤0.1;
M⁴ is one or more elements selected from among Al and Mn;
M⁵ is one or more elements selected from among B, Ba, Ca, Ce, Cr, Fe, Mg, Mo, Nb, Si, Sr, Ti, V, W, and Zr; and
X is one or more elements selected from among F, P, and S.

6. The rechargeable lithium battery (100) as claimed in any of the claims 1 to 5, wherein the positive electrode active material layer further comprises a binder and a conductive material.

7. The rechargeable lithium battery (100) as claimed in any of the claims 1 to 6, wherein the negative electrode active material comprises a silicon-carbon composite.

8. The rechargeable lithium battery (100) as claimed in any of the claims 1 to 7, wherein the silicon-carbon composite is in a form of the silicon particles and an amorphous carbon coated on a surface of the silicon particles.

9. The rechargeable lithium battery (100) as claimed in any of the claims 1 to 8, wherein the negative electrode active material further comprises crystalline carbon.

10. The rechargeable lithium battery (100) as claimed in any of the claims 1 to 9, wherein the rechargeable lithium battery (100) further comprises an electrolyte solution.

11. The rechargeable lithium battery (100) as claimed in any of the claims 1 to 10, wherein the electrolyte solution comprises a non-aqueous organic solvent and a lithium salt.
